# EUROPEAN PATENT APPLICATION

(11) **EP 4 601 129 A1**
(43) Date of publication of application: **13.08.2025**
(21) Application number: 25150471.8
(22) Date of filing: 07.01.2025
(51) Int. Cl.: H01R 13/631, H01R 13/24

(54) **CONTACT ASSEMBLY, ROBOTIC WORK TOOL CHARGING DEVICE, ROBOTIC WORK TOOL, AND ROBOTIC WORK TOOL SYSTEM**

(30) Priority: 06.02.2024 SE 2450115
(71) Applicant: Husqvarna AB, 561 82 Huskvarna (SE)
(72) Inventor: Jakobsson Sjöberg, Niklas, Huskvarna (SE); Elonsson, Martin, Huskvarna (SE)

(57) **Abstract**

A contact assembly (1) for a robotic work tool system (30, 30') is disclosed. The contact assembly (1) comprises a first contact member (m1) comprising one or more first connection points (p1), wherein the first contact member (m1) is pivotably and translatably connected to a body portion (4) of the charging device (10), a first biasing member (b1) arranged to bias the first contact member (m1) towards a contact element (22) during a charging operation, and a second contact member (m2) translatably connected relative to the first contact member (m1). The second contact member (m2) comprises one or more second connection points (p2), and wherein the contact assembly (1) comprises a second biasing member (b2) interconnecting the first and second contact member (m1, m2) to bias the second contact member (m2) towards the contact element (22). The present disclosure further relates to a robotic work tool charging device (10), a robotic work tool (20'), and a robotic work tool system (30).

## Description

### TECHNICAL FIELD

The present disclosure relates to a contact assembly for a robotic work tool system. The present disclosure further relates to a robotic work tool charging device comprising a contact assembly, wherein the contact assembly is configured to engage a contact element of a robotic work tool for receiving electric current from the charging device in a charging operation. Moreover, the present disclosure further relates to a robotic work tool comprising a contact assembly, wherein the contact assembly is configured to engage a contact element of a robotic work tool charging device for receiving electric current from the charging device in a charging operation The present disclosure further relates to a robotic work tool system.

### BACKGROUND

Robotic work tools, such as self-propelled autonomous robotic lawnmowers, have become increasingly popular, partly because they usually are capable of performing work which previously was made manually. A robotic work tool is capable of navigating in an area in an autonomous manner, i.e., without the intervention or the direct control of a user. The robotic work tool may move in a systematic and/or random pattern to ensure that the area is completely covered. Some robotic work tools require a user to set up a border wire around an area that defines the area to be operated by the robotic work tool. Such robotic work tools use a sensor to locate the wire and thereby the boundary of the area to be operated.

As an alternative, or in addition, robotic work tools may comprise other types of positioning units and sensors, for example sensors for detecting an event, such as a collision with an object within the area and/or a satellite-based positioning unit. A satellite-based positioning unit typically utilize a space-based satellite navigation system, such as a Global Positioning System (GPS), The Russian GLObal NAvigation Satellite System (GLONASS), European Union Galileo positioning system, Chinese Compass navigation system, or Indian Regional Navigational Satellite System to provide a current position estimate of the robotic work tool. Generally, robotic work tools operate unattended within the area in which they operate. Examples of such areas are lawns, gardens, parks, sports fields, golf courts and the like.

Usually, a robotic work tool comprises a control arrangement configured to navigate the robotic work tool based on input from one or more of the above-mentioned types of positioning units and sensors. Moreover, a robotic work tool usually comprises one or more batteries configured to supply electricity to one or more electric propulsion motors of the robotic work tool and/or one or more electrically driven tools, such as one or more cutting units.

After a certain operation time, the one or more batteries of the robotic work tool must be recharged. This is normally done using a charging device, such as a docking station. Typically, the control arrangement of the robotic work tool navigates the robotic work tool to the charging device when the one or more batteries is to be recharged, such as when the state of charge (SOC) level of the batteries is below a threshold state of charge. In some cases, the robotic work tool uses a wire to locate the charging device but may as an alternative, or in addition, use one or more other types of positioning units and/or sensors to locate the charging device, such as one or more of the above-mentioned types.

A robotic work tool is usually sold to a consumer in a kit comprising the robotic work tool and a charging device adapted to charge the one or more batteries of the robotic work tool. Such a kit can also be referred to as a robotic work tool system. The robotic work tool system usually comprises a number of contact assemblies configured to engage a number of contact elements to transfer electric current between the charging device and the robotic work tool in a charging operation so as to charge the one or more batteries of the robotic work tool.

When the robotic work tool is near the charging device, the robotic work tool is to perform a docking procedure in which the robotic work tool is moved along a docking direction relative to the charging device to obtain electrical contact between the contact assemblies and the contact elements.

A trend in robotic work tool development is towards faster battery charging which requires higher charging power to be transferred between the number of contact assemblies and the contact elements. A higher charging power necessitates larger contact assemblies and/or a higher number of contact assemblies. This normally results in a bulkier and more space-consuming solutions.

Requiring larger contact elements or larger contact assemblies for charging on a robotic work tool brings several disadvantages that extend beyond mere aesthetics. Firstly, it often leads to an increase in the size and weight of the tool, which can negatively impact its efficiency and manoeuvrability. Additionally, integrating larger contact elements or larger contact assemblies adds a layer of complexity to the design process. Not only does this challenge the goal of maintaining a compact and efficient form, but it also can drive up manufacturing costs. Consequently, this can make the robotic work tool more expensive to produce and, ultimately, to purchase.

Furthermore, the durability of these larger contact elements or larger contact assemblies can be a concern. They might be more vulnerable to environmental factors like dust and moisture, which could compromise the reliability and longevity of the charging mechanism.

Another common problem in robotic work tool systems is misalignment between the robotic work tool and the charging device after docking procedures. This often occurs when the robotic work tool fails to move straight into the charging device during a docking procedure. A misalignment between the robotic work tool and the charging device usually results in poor or no electrical contact between the number of contact assemblies and the contact elements.

A poor electrical contact between the number of contact assemblies and the contact elements prevents efficient charging and may cause a standstill of the robotic work tool. This is because a poor electrical contact can lead to an inability to charge the one or more batteries of the robotic work tool which consequently can interrupt autonomous operation of the robotic work tool system. Obviously, such situations may annoy a user of a robotic work tool system because the robotic work tool will not be able to perform its task, such as cutting grass.

Moreover, generally, on today's consumer market, it is an advantage if products, such as robotic work tools and associated components, systems, and arrangements, are operational reliable, and have conditions and/or characteristics suitable for being manufactured and assembled in a cost-efficient manner.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a contact assembly for a robotic work tool system, wherein the contact assembly is configured to engage a contact element of the robotic work tool system to transfer electric current between a robotic work tool charging device and a robotic work tool of the robotic work tool system in a charging operation. The contact assembly comprises a body portion configured to be attached to one of the charging device and the robotic work tool, wherein the other of the charging device and the robotic work tool comprises the contact element. The contact assembly further comprises a first contact member comprising one or more first connection points each arranged to provide a point of contact between the first contact member and the contact element. The first contact member is pivotably and translatably connected to the body portion. The contact assembly further comprises a first biasing member interconnecting the first contact member and the body portion so as to bias the first contact member towards the contact element during the charging operation and a second contact member translatably connected relative to the first contact member. The second contact member comprises one or more second connection points each arranged to provide a point of contact between the second contact member and the contact element. The contact assembly comprises a second biasing member interconnecting the second contact member and the first contact member so as to bias the second contact member towards the contact element during the charging operation.

Thereby, a contact assembly is provided having conditions for allowing high charging power to be transferred between the contact assembly and a contact element of a robotic work tool system while obtaining a compact contact assembly. A high charging power can be allowed because the contact assembly comprises first and second contact members and the fact that each of the first and second contact members comprises one or more connection points each arranged to provide a point of contact between the contact member and the contact element.

Moreover, a high charging power can be allowed because the contact assembly comprises the first biasing member interconnecting the first contact member and the body portion so as to bias the first contact member towards the contact element as well as the second biasing member interconnecting the second contact member and the first contact member so as to bias the second contact member towards the contact element. Furthermore, a high charging power can be allowed because the first contact member is pivotably and translatably connected to the body portion and the second contact member is translatably connected relative to the first contact member. Thereby, a point of contact can be ensured between the first and second connection points and the contact element of the robotic work tool also in cases in which the contact element is non-flat and/or non-straight, which accordingly allows for high charging power also in such situations.

Conditions are provided for a compact contact assembly because the second contact member is translatably connected relative to the first contact member and because the second biasing member interconnects the first and second contact members. As a further result, the need for arranging large sized contact elements on one of the robotic work tool and the robotic work tool charging device of a robotic work tool system is circumvented, thereby providing conditions for avoiding the disadvantages and drawbacks of arranging large sized contact elements in robotic work tool systems.

Moreover, due to the features of the contact assembly, a contact assembly is provided having conditions for allowing relatively large misalignments between the robotic work tool and the charging device while ensuring a secure electrical contact between the contact assembly and the contact element. This is because the first contact member is pivotably and translatably connected to the body portion and the second contact member is translatably connected relative to the first contact member. Moreover, relatively large misalignments between the robotic work tool and the charging device are allowed because the first biasing member interconnects the first contact member and the body portion to bias the first contact member towards the contact element and the second biasing member interconnects the second contact member and the first contact member to bias the second contact member towards the contact element.

In other words, due to these features, a contact assembly is provided having conditions for being compact and allowing high charging power to be transferred between the contact assembly and a contact element of a robotic work tool system while allowing relatively large misalignments between the robotic work tool and the charging device during a charging operation of the robotic work tool. As a further result, a contact assembly is provided capable of increasing the operational reliability of robotic work tool systems and reducing charging times of batteries of robotic work tools.

Accordingly, a contact assembly is provided overcoming, or at least alleviating, at least some of the above-mentioned problems and drawbacks. As a result, the above-mentioned object is achieved.

Optionally, the second contact member is in abutting contact with the first contact member. Thereby, further improved conditions are provided for obtaining a compact contact assembly, thereby providing improved conditions for avoiding the disadvantages and drawbacks of arranging large sized contact elements on robotic work tools.

Optionally, the second contact member is stacked on top of the first contact member. Thereby, even further improved conditions are provided for obtaining a compact contact assembly, thereby providing further improved conditions for avoiding the disadvantages and drawbacks of arranging large sized contact elements on robotic work tools.

Optionally, the second contact member comprises a stop surface configured to abut against a surface of the first contact member in an unbiased state of the contact assembly. Thereby, the maxima translational movement of the second contact member is limited in a simple an efficient manner thereby providing conditions for low manufacturing and assembling costs of the contact assembly.

Optionally, the one or more second connection points of the second contact member forms a distal end of the contact assembly in an unbiased state of the contact assembly. Thereby, an abutting contact between each connection point of the contact assembly and the contact element can be further ensured in various situations, such as for example upon misaligned dockings of the robotic work tool relative to charging device. In addition, an abutting contact between each connection point of the contact assembly and the contact element can be further ensured also in cases where the contact element is not perfectly flat. Thus, due to these features, a secure electrical contact between the contact assembly and the contact element can be further ensured.

Optionally, the first contact member comprises an elongate opening arranged to receive a guide member of the body portion so as to allow the first contact member to be pivotably and translatably connected to the body portion. Thereby, a contact assembly is provided having conditions and characteristics suitable for being manufactured and assembled in a cost-efficient manner while allowing the first contact member to be pivotably and translatably connected to the body portion.

Optionally, the maxima translational movement of the first contact member is limited by the elongate opening of the first contact member, and wherein an axis of rotation of the first contact member is defined by the guide member. Thereby, a contact assembly is provided having conditions and characteristics suitable for being manufactured and assembled in a cost-efficient manner while allowing the first contact member to be pivotably and translatably connected to the body portion.

Optionally, the second contact member is pivotably connected relative to the first contact member. Thereby, an abutting contact between each connection point of the contact assembly and the contact element can be further ensured in various situations, such as for example misaligned dockings of the robotic work tool relative to charging device. In addition, an abutting contact between each connection point of the contact assembly and the contact element can be further ensured also in cases where the contact element of the robotic work tool is not perfectly flat. Accordingly, due to these features, a secure electrical contact between the contact assembly and the contact element of the robotic work tool can be further ensured. Moreover, since the second contact member is pivotably connected relative to the first contact member, a contact assembly is provided with a reduced probability of becoming damaged, for example during failed docking attempts of a robotic work tool.

Optionally, the second contact member comprises an elongate opening arranged to receive a guide member of the body portion so as to allow the second contact member to be pivotably and translatably connected relative to the first contact member. Thereby, a contact assembly is provided having conditions and characteristics suitable for being manufactured and assembled in a cost-efficient manner while allowing the second contact member to be pivotably and translatably connected relative to the first contact member, and thereby also relative to the body portion. Moreover, a contact assembly is provided having conditions and characteristics suitable for being compact.

Optionally, the maxima translational movement of the second contact member is limited by the elongate opening of the second contact member, and wherein an axis of rotation of the second contact member is defined by the guide member. Thereby, a contact assembly is provided having conditions and characteristics suitable for being manufactured and assembled in a cost-efficient manner while allowing the second contact member to be pivotably and translatably connected relative to the first contact member, and thereby also relative to the body portion. Moreover, a contact assembly is provided having conditions and characteristics suitable for being compact.

Optionally, the first contact member comprises two first connection points, and wherein the one or more second connection points of the second contact member is/are located at least substantially between the two first connection points. Thereby, an abutting contact between each connection point of the contact assembly and the contact element of the robotic work tool system can be further ensured in various situations, such as for example upon misaligned dockings of the robotic work tool relative to charging device. In addition, an abutting contact between each connection point of the contact assembly and the contact element of the robotic work tool system can be further ensured also in cases where the contact element is not perfectly flat. Accordingly, due to these features, a secure electrical contact between the contact assembly and the contact element can be further ensured. Moreover, since the second contact member is pivotably connected relative to the first contact member, a contact assembly is provided with a reduced probability of becoming damaged, for example during failed docking attempts of a robotic work tool.

Optionally, the second contact member comprises two second connection points. Thereby, an abutting contact between connection points of the contact assembly and the contact element of the robotic work tool system can be further ensured in various situations, such as for example upon misaligned dockings of the robotic work tool relative to charging device. Accordingly, due to these features, a secure electrical contact between the contact assembly and the contact element can be further ensured to allow high charging power to be transferred between the contact assembly and the contact element in various situations. Moreover, a contact assembly is provided having conditions and characteristics suitable for being compact while comprising a high number of connection points.

Optionally, the first biasing member is a helical spring. Thereby, a contact assembly is provided having conditions for being compact and conditions and characteristics suitable for being manufactured and assembled in a cost-efficient manner while allowing high charging power to be transferred between the contact assembly and a contact element of the robotic work tool system.

Optionally, the second biasing member is a helical spring. Thereby, a contact assembly is provided having conditions for being compact and conditions and characteristics suitable for being manufactured and assembled in a cost-efficient manner while allowing high charging power to be transferred between the contact assembly and a contact element of the robotic work tool system.

Optionally, the first contact member is made from a sheet of metal. Thereby, a contact assembly is provided having conditions for being compact and conditions and characteristics suitable for being manufactured and assembled in a cost-efficient manner while allowing high charging power to be transferred between the contact assembly and a contact element of the robotic work tool system.

Optionally, the second contact member is made from a sheet of metal. Thereby, a contact assembly is provided having conditions for being compact and conditions and characteristics suitable for being manufactured and assembled in a cost-efficient manner while allowing high charging power to be transferred between the contact assembly and a contact element of the robotic work tool system.

According to a second aspect of the present disclosure, the object is achieved by a robotic work tool charging device comprising a contact assembly according to some embodiments of the first aspect of the invention, wherein the body portion of the contact assembly is attached to a body part of the charging device.

Thereby, a charging device is provided having conditions for allowing high charging power to be transferred between the contact assembly and a contact element of a robotic work tool while obtaining a compact contact assembly. A high charging power can be allowed because the contact assembly comprises first and second contact members and the fact that each of the first and second contact members comprises one or more connection points each arranged to provide a point of contact between the contact member and the contact element.

Moreover, a high charging power can be allowed because the contact assembly comprises the first biasing member interconnecting the first contact member and the body portion so as to bias the first contact member towards the contact element as well as the second biasing member interconnecting the second contact member and the first contact member so as to bias the second contact member towards the contact element. Furthermore, a high charging power can be allowed because the first contact member is pivotably and translatably connected to the body portion of the charging device and the second contact member is translatably connected relative to the first contact member. Thereby, a point of contact can be ensured between the first and second connection points and the contact element of the robotic work tool also in cases in which the contact element is non-flat and/or non-straight, which accordingly allows for high charging power also in such situations.

Conditions are provided for a compact contact assembly because the second contact member is translatably connected relative to the first contact member and because the second biasing member interconnects the first and second contact members. As a further result, the need for arranging large sized contact elements on the robotic work tool is circumvented, thereby providing conditions for avoiding the disadvantages and drawbacks of arranging large sized contact elements on robotic work tools.

Moreover, due to the features of the contact assembly of the charging device, a charging device is provided having conditions for allowing relatively large misalignments between the robotic work tool and the charging device while ensuring a secure electrical contact between the contact assembly and the contact element of the robotic work tool. This is because the first contact member is pivotably and translatably connected to the body portion of the charging device and the second contact member is translatably connected relative to the first contact member. Moreover, relatively large misalignments between the robotic work tool and the charging device are allowed because the first biasing member interconnects the first contact member and the body portion to bias the first contact member towards the contact element and the second biasing member interconnects the second contact member and the first contact member to bias the second contact member towards the contact element.

In other words, due to these features, a charging device is provided having conditions for a compact contact assembly allowing high charging power to be transferred between the contact assembly and a contact element of a robotic work tool while allowing relatively large misalignments between the robotic work tool and the charging device during a charging operation of the robotic work tool. As a further result, a charging device is provided capable of increasing the operational reliability of robotic work tool systems and reducing charging times of batteries of robotic work tools.

Accordingly, a robotic work tool charging device is provided overcoming, or at least alleviating, at least some of the above-mentioned problems and drawbacks. As a result, the above-mentioned object is achieved.

According to a third aspect of the present disclosure, the object is achieved by a robotic work tool comprising a contact assembly according to some embodiments of the first aspect of the invention, wherein the body portion of the contact assembly is attached to a body part of the robotic work tool.

Thereby, a robotic work tool is provided having conditions for allowing high charging power to be transferred between the contact assembly and a contact element of a robotic work tool charging device while obtaining a compact contact assembly. A high charging power can be allowed because the contact assembly comprises first and second contact members and the fact that each of the first and second contact members comprises one or more connection points each arranged to provide a point of contact between the contact member and the contact element.

Moreover, a high charging power can be allowed because the contact assembly comprises the first biasing member interconnecting the first contact member and the body portion so as to bias the first contact member towards the contact element as well as the second biasing member interconnecting the second contact member and the first contact member so as to bias the second contact member towards the contact element. Furthermore, a high charging power can be allowed because the first contact member is pivotably and translatably connected to the body portion of the robotic work tool and the second contact member is translatably connected relative to the first contact member. Thereby, a point of contact can be ensured between the first and second connection points and the contact element of the charging device also in cases in which the contact element is non-flat and/or non-straight, which accordingly allows for high charging power also in such situations.

Conditions are provided for a compact contact assembly because the second contact member is translatably connected relative to the first contact member and because the second biasing member interconnects the first and second contact members. As a further result, the need for arranging large sized contact assemblies on the robotic work tool is circumvented, thereby providing conditions for avoiding the disadvantages and drawbacks of arranging large sized contact assemblies on robotic work tools.

Moreover, due to the features of the contact assembly of the robotic work tool, a robotic work tool is provided having conditions for allowing relatively large misalignments between the robotic work tool and the charging device while ensuring a secure electrical contact between the contact assembly and the contact element of the charging device. This is because the first contact member is pivotably and translatably connected to the body portion of the robotic work tool and the second contact member is translatably connected relative to the first contact member. Moreover, relatively large misalignments between the robotic work tool and the charging device are allowed because the first biasing member interconnects the first contact member and the body portion to bias the first contact member towards the contact element and the second biasing member interconnects the second contact member and the first contact member to bias the second contact member towards the contact element.

In other words, due to these features, a robotic work tool is provided having conditions for a compact contact assembly allowing high charging power to be transferred between the contact assembly and a contact element of a charging device while allowing relatively large misalignments between the robotic work tool and the charging device during a charging operation of the robotic work tool. As a further result, a robotic work tool is provided capable of increasing the operational reliability of robotic work tool systems and reducing charging times of batteries of the robotic work tool.

Accordingly, a robotic work tool is provided overcoming, or at least alleviating, at least some of the above-mentioned problems and drawbacks. As a result, the above-mentioned object is achieved.

According to a fourth aspect of the present disclosure, the object is achieved by a robotic work tool system comprising a robotic work tool charging device according to some embodiments of the second aspect of the invention, or a robotic work tool according to some embodiments of the third aspect of the invention.

As a result, a robotic work tool system is provided having conditions for a compact contact assembly in the charging device or in the robotic work tool, as well as a compact contact element in the other of the charging device and the robotic work tool, while allowing high charging power to be transferred between the contact assembly and the contact element. Moreover a robotic work tool system is provided allowing relatively large misalignments between the robotic work tool and the charging device during a charging operation of the robotic work tool.

In addition, a robotic work tool system is provided having conditions for increased operational reliability and reduced charging times of batteries of the robotic work tool.

Accordingly, a robotic work tool system is provided overcoming, or at least alleviating, at least some of the above-mentioned problems and drawbacks. As a result, the above-mentioned object is achieved.

Optionally, the robotic work tool is an autonomous robotic lawnmower. Thereby, a robotic work tool system is provided having conditions for a compact contact assembly in the charging device or in the autonomous robotic lawnmower, as well as and a compact contact element in the other of the charging device and the autonomous robotic lawnmower while allowing high charging power to be transferred between the contact assembly and the contact element while also allowing relatively large misalignments between the autonomous robotic lawnmower and the charging device during a charging operation of the autonomous robotic lawnmower.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 illustrates a robotic work tool system according to some embodiments,
Fig. 2 illustrates the robotic work tool system illustrated in Fig. 1 in which a robotic work tool of the robotic work tool system is illustrated in a docked position relative to a charging device robotic work tool system,
Fig. 3 illustrates a cross section of a portion of the robotic work tool system illustrated in Fig. 2,
Fig. 4 illustrates a first perspective view of a contact assembly and a body portion of the charging device illustrated in Fig. 1 - Fig. 3,
Fig. 5 illustrates an exploded view of the contact assembly illustrated in Fig. 4 and the body portion of the charging device illustrated in Fig. 1 - Fig. 3,
Fig. 6 illustrates a second perspective view of the contact assembly and a body portion of the charging device explained with reference to Fig. 1 - Fig. 5,
Fig. 7 illustrates the contact assembly illustrated in Fig. 6 as seen in a direction coinciding with an axis of rotation of first and second contact members of the contact assembly,
Fig. 8 illustrates the contact assembly illustrated in Fig. 7 in which the contact assembly is illustrated in a first biased state,
Fig. 9 illustrates the contact assembly illustrated in Fig. 7 and Fig. 8 in which the contact assembly is illustrated in a second biased state,
Fig. 10 illustrates the contact assembly illustrated in Fig. 7 - Fig. 9 in which the contact assembly is illustrated in a third biased state,
Fig. 11 illustrates the contact assembly illustrated in Fig. 7 - Fig. 10 in which the contact assembly is illustrated in a fourth biased state,
Fig. 12 illustrates an enlarged cross section of a portion of the robotic work tool system illustrated in Fig. 2, and
Fig. 13 illustrates a robotic work tool system according to some further embodiments.

### DETAILED DESCRIPTION

Aspects of the present disclosure will now be described more fully. Like reference signs refer to like elements throughout. Well-known functions or constructions will not necessarily be described in detail for brevity and/or clarity.

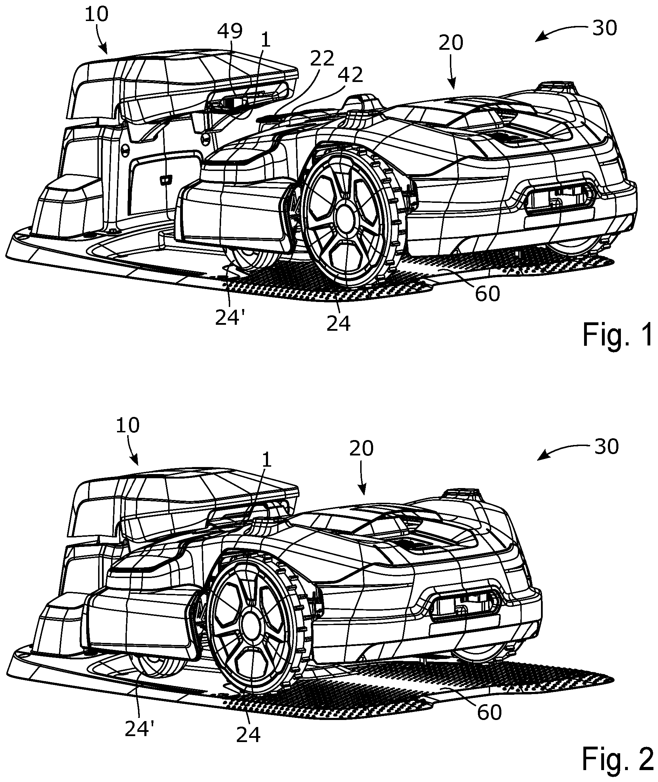

Fig. 1 illustrates a robotic work tool system 30 according to some embodiments. The robotic work tool system 30 comprises a robotic work tool 20 and a robotic work tool charging device 10.

According to the illustrated embodiments, the robotic work tool 20 is a self-propelled autonomous robotic lawnmower, i.e., a robotic lawnmower capable of navigating and cutting grass in an autonomous manner in an area without the intervention or the control of a user. Moreover, according to the illustrated embodiments, the robotic work tool 20 is a small or mid-sized robotic lawnmower configured to be used to cut grass in areas used for aesthetic and recreational purposes, such as gardens, parks, city parks, sports fields, lawns around houses, apartments, commercial buildings, offices, and the like.

Since the robotic work tool 20 is a self-propelled autonomous robotic lawnmower according to the illustrated embodiments, the robotic work tool system 30 may also be referred to as a robotic lawnmower system.

According to further embodiments, the robotic work tool 20, as referred to herein, may be another type of robotic work tool capable of navigating and operating an area in an autonomous manner without the intervention or the control of a user, such as for example a street sweeper, a snow removal tool, a mine clearance robot, or any other robotic work tool that is required to operate in a work area in a methodical and systematic or position oriented manner.

The robotic work tool charging device 10 may also be referred to as a docking station. For reasons of brevity and clarity, the robotic work tool charging device 10 is in some places herein simply referred to as the charging device 10.

The robotic work tool 20 comprises a number of rechargeable batteries, such as a number of lithium ion batteries. The number of rechargeable batteries is not indicated in Fig. 1 for reasons of brevity and clarity. The charging device 10 is configured to charge the number of rechargeable batteries of the robotic work tool 20 as is further explained in detail herein.

The robotic work tool 20 comprises a cutting unit and an electric motor configured to rotate the cutting unit to cut vegetation, such as grass, during operation of the robotic work tool 20. According to further embodiments, the robotic work tool 20 may comprise another type of unit or tool for performing work. The cutting unit and the electric motor are not indicated in Fig. 1 for reasons of brevity and clarity. The electric motor is configured to operate using electricity from the number of rechargeable batteries of the robotic work tool 20.

Moreover, according to the illustrated embodiments, the robotic work tool 20 comprises four wheels 24, 24', namely two drive wheels 24 and two support wheels 24'. The drive wheels 24 of the robotic work tool 20 may each be powered by an electric propulsion motor of the robotic work tool 20 to provide motive power and/or steering of the robotic work tool 20. Each of such electric propulsion motors may be arranged to rotate a drive wheel 24 using electricity from the number of rechargeable batteries of the robotic work tool 20.

According to the illustrated embodiments, the drive wheels 24 of the robotic work tool 20 are non-steered wheels having a fix rolling direction in relation to a tool chassis of the robotic work tool 20. The respective rolling direction of the drive wheels 24 of the robotic work tool 20 is substantially parallel to a longitudinal direction of the robotic work tool 20. According to the illustrated embodiments, the support wheels 24' are non-driven wheels. Moreover, according to the illustrated embodiments, the support wheels 24' can pivot around a respective pivot axis such that the rolling direction of the respective support wheel 24' can follow a travel direction of the robotic work tool 20.

As understood from the above, when the drive wheels 24 of the robotic work tool 20 are rotated at the same rotational velocity in a forward rotational direction, and no wheel slip is occurring, the robotic work tool 20 will move in a forward moving direction. Likewise, when the drive wheels 24 of the robotic work tool 20 are rotated at the same rotational velocity in a reverse rotational direction, and no wheel slip is occurring, the robotic work tool 20 will move in a reverse moving direction. The reverse moving direction is opposite to the forward moving direction.

According to the illustrated embodiments, the robotic work tool 20 may be referred to as a four-wheeled rear wheel driven robotic work tool 20. However, according to further embodiments, the robotic work tool 20 may be provided with another number of wheels 24, 24', such as three wheels. Moreover, according to further embodiments, the robotic work tool 20 may be provided with another configuration of driven and non-driven wheels, such as a front wheel drive or an all-wheel drive.

The robotic work tool 20 may comprise a control arrangement configured to control propulsion of the robotic work tool 20, and steer the robotic work tool 20, by controlling the electrical propulsion motors of the robotic work tool 20 arranged to drive the drive wheels 24 of the robotic work tool 20. According to further embodiments, the control arrangement may be configured to steer the robotic work tool 20 by controlling the angle of steered wheels of the robotic work tool 20. According to still further embodiments, the robotic work tool may be an articulated robotic work tool, wherein the control arrangement may be configured to steer the robotic work tool by controlling the angle between frame portions of the articulated robotic work tool.

The control arrangement may be configured to control propulsion of the robotic work tool 20, and steer the robotic work tool 20, so as to navigate the robotic work tool 20 in an area to be operated. The robotic work tool 20 may further comprise one or more sensors arranged to sense a magnetic field of a wire, and/or one or more positioning units, and/or one or more sensors arranged to detect an impending or ongoing collision event with an object. In addition, the robotic work tool 20 may comprise a communication unit connected to the control arrangement. The communication unit may be configured to communicate with a remote communication unit to receive instructions therefrom and/or to send information thereto. The communication may be performed wirelessly over a wireless connection such as the internet, or a wireless local area network (WLAN), or a wireless connection for exchanging data over short distances using short wavelength, i.e., ultra-high frequency (UHF) radio waves in the industrial, scientific, and medical (ISM) band from 2.4 to 2.486 GHz.

As an alternative, or in addition, the control arrangement may be configured to obtain data from, or may comprise, one or more positioning units utilizing a local reference source, such as a local sender and/or a wire, to estimate or verify a current position of the robotic work tool 20. As another example, the robotic work tool 20 may comprise one or more of a Radio Detection and Ranging (radar) sensor, a Light Detection and Ranging (lidar) sensor, an image capturing unit, such as a camera, an ultrasound sensor, or the like.

The control arrangement may be configured to control propulsion of the robotic work tool 20, and steer the robotic work tool 20, so as to navigate the robotic work tool 20 in a systematic and/or random pattern to ensure that an area is completely covered, using input from one or more of the above-described sensors and/or units.

As mentioned, the charging device 10 is configured to charge the number of rechargeable batteries of the robotic work tool 20. According to the illustrated embodiments, the charging device 10 comprises a charging device plate 60. The charging device plate 60 is configured to be positioned onto a ground surface and the robotic work tool 20 is configured to move onto the charging device plate 60 such that all wheels 24, 24' of the robotic work tool 20 abut against an upper surface of the charging device plate 60 in a docking procedure of the robotic work tool 20. In Fig. 1, the robotic work tool 20 is illustrated as positioned on the charging device plate 60 of the charging device 10 but not yet in a docked position relative to the charging device 10.

According to embodiments herein, the robotic work tool system 30 comprises a contact assembly 1 and a contact element 22, wherein one of the contact assembly 1 and the contact element 22 is arranged on the charging device 10 and the other of the contact assembly 1 and the contact element 22 is arranged on the robotic work tool 20. As is further explained herein, the contact assembly 1 is configured to engage the contact element 22 to transfer electric current between the charging device 10 and the robotic work tool 20 of the robotic work tool system 30 in a charging operation of the robotic work tool 20 using the charging device 10.

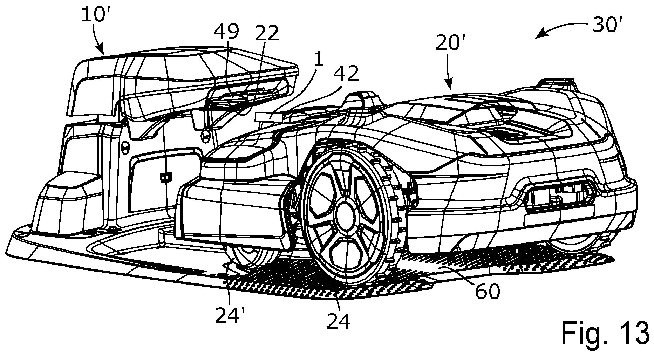

According to the embodiments illustrated in Fig. 1, the charging device 10 comprises the contact assembly 1 and the robotic work tool 20 comprises the contact element 22. However, as indicated above, and as is further explained with reference to Fig. 13 below, this may be the other way around, i.e., the robotic work tool 20 may comprise the contact assembly 1 and the charging device 10 may comprise the contact element 22.

As understood from the above, according to the illustrated embodiments, the contact element 22 is configured to engage with the contact assembly 1 of the charging device 10 for receiving electric current from the charging device 10 in the charging operation of the robotic work tool 20. In Fig. 1, the contact element 22 of the robotic work tool 20 does not engage with the contact assembly 1 of the charging device 10 because the robotic work tool 20 is not in the docked position relative to the charging device 10.

Fig. 2 illustrates the robotic work tool system 30 illustrated in Fig. 1 in which the robotic work tool 20 is illustrated in the docked position relative to the charging device 10. The robotic work tool 20 may assume the docked position by moving in a forward moving direction from the position illustrated in Fig. 1. In the docked position, the contact element of the robotic work tool 20 engage with the contact assembly 1 of the charging device 10. The contact element of the robotic work tool 20 is not seen in Fig. 2 because it is hidden by parts of the charging device 10.

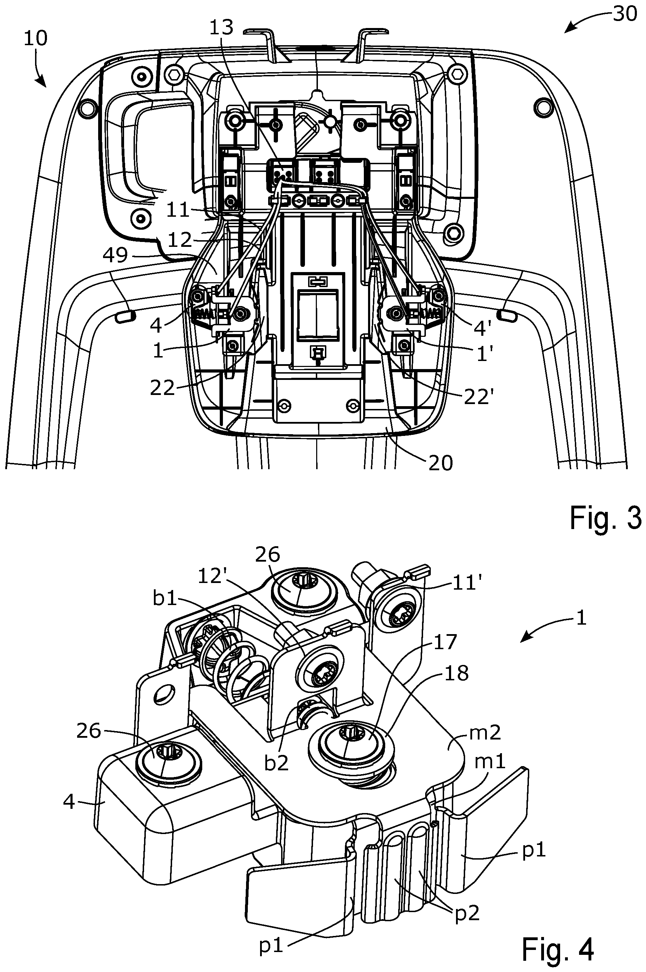

Fig. 3 illustrates a cross section of a portion of the robotic work tool system 30 illustrated in Fig. 2. In Fig. 3, the cross section is made in a plane parallel to the charging device plate 30 illustrated in Fig. 2. Below, simultaneous reference is made to Fig. 1 - Fig. 3, if not indicated otherwise.

As mentioned, according to the embodiments illustrated in Fig. 1 and Fig. 2, the charging device 10 comprises the contact assembly 1. In Fig. 3, the contact assembly 1 of the charging device 10 can be seen in more detail. The contact assembly 1 is attached to a body part 49 of the charging device 10. Moreover, as mentioned, in Fig. 3, the robotic work tool 20 is in the docked position relative to the charging device 10 and the contact assembly 1 engages the contact element 22 of a robotic work tool 20 for receiving electric current from the charging device 10.

Moreover, as seen in Fig. 3, the charging device 10 comprises a second contact assembly 1'. The second contact assembly 1' is configured to engage with a second contact element 22' of the robotic work tool 20 when the robotic work tool 20 is in the docked position relative to the charging device 10 as is depicted in Fig. 3. The second contact assembly 1' comprises an identical but mirrored design as the contact assembly 1 explained herein. Moreover, the second contact assembly 1' comprises the same features, functions, and advantages as the contact assembly 1 explained herein. These features, functions, and advantages will not be repeated for reasons of brevity and clarity.

Since the robotic work tool 20 is in the docked position relative to the charging device 10 in Fig. 3 and the contact assembly 1 engages the contact element 22 of a robotic work tool 20, Fig. 3 can be said to depict a charging operation of the robotic work tool 20.

**Fig. 4** illustrates a first perspective view of the contact assembly 1 illustrated in Fig. 1 - Fig. 3. Below, simultaneous reference is made to Fig. 1 - Fig. 4, if not indicated otherwise.

The contact assembly 1 comprises a body portion 4. The body portion 4 of the contact assembly 1 is configured to be attached to a body part of the charging device 10 or the robotic work tool 20 depending on the configuration of the robotic work tool system. According to the embodiments illustrated in Fig. 4, the contact assembly 1 is configured to be attached to the body part of the charging device 10 or the robotic work tool 20 using a number of fastening elements 26, such as screws. However, according to further embodiments, the body portion 4 of the contact assembly 1 may be attached to the body part of the charging device 10 or the robotic work tool 20 in another manner, or may be an integral part of the charging device 10 or the robotic work tool 20.

As mentioned, according to the embodiments illustrated in Fig. 1 - Fig. 3, the charging device 10 comprises the contact assembly 1. Therefore, in these embodiments, the contact assembly 1 is configured to be attached to the body part 49 of the charging device 10 using the number of fastening elements 26.

The contact assembly 1 comprises a first contact member m1 and a second contact member m2. According to the illustrated embodiments, each of the first and second contact members m1, m2 is made from a sheet of metal.

Moreover, according to the illustrated embodiments, the first contact member m1 comprises two first connection points p1 each arranged to provide a point of contact between the first contact member m1 and the contact element 22 of the robotic work tool 20. According to further embodiments, the first contact member m1 may comprise another number of first connection points p1, such as one, three, or four first connection points p1.

According to the illustrated embodiments, the second contact member m2 comprises two second connection points p2 each arranged to provide a point of contact between the second contact member m2 and the contact element 22 of the robotic work tool 20. According to further embodiments, the second contact member m2 may comprise another number of second connection points p2, such as one, three, or four second connection points p2. According to the illustrated embodiments, the second connection points p2 of the second contact member m2 are located at least substantially between the two first connection points p1 of the first contact member m1.

The first contact member m1 comprises a cable attachment portion 11' for the connection of a first cable 11. That is, in Fig. 3, a first cable 11 of the charging device 10 is indicated. The first cable 11 electrically connects the first contact member m1 to a charging unit 13 of the charging device 10 by being electrically connected to the cable attachment portion 11' of the first contact member m1 indicated in Fig. 4. The first cable 11 may be attached to the cable attachment portion 11' of the first contact member m1 using a fastening element, as is indicated in Fig. 4.

Likewise, the second contact member m2 comprises a cable attachment portion 12' for the connection of a second cable 12. That is, in Fig. 3, a second cable 12 of the charging device 10 is indicated. The second cable 12 electrically connects the second contact member m2 to the charging unit 13 of the charging device 10 by being electrically connected to the cable attachment portion 12' of the second contact member m2 indicated in Fig. 4. The second cable 12 may be attached to the cable attachment portion 12' of the second contact member m2 using a fastening element, as is indicated in Fig. 4.

The charging device 10 comprises a power cable for connection to an external electric power source, such as an electric power grid. The power cable is not indicated in Fig. 1 - Fig. 3 for reasons of brevity and clarity. The charging unit 13 of the charging device 10 is electrically connected to the power cable. The charging unit 13 of the charging device 10 is moreover configured to supply a charging current to the first and second contact members m1, m2 respectively via the cables 11, 12 indicated in Fig. 3. The charging current is received by the contact element 22 of the robotic work tool 20 and is transferred internally to the number of rechargeable batteries of the robotic work tool 20.

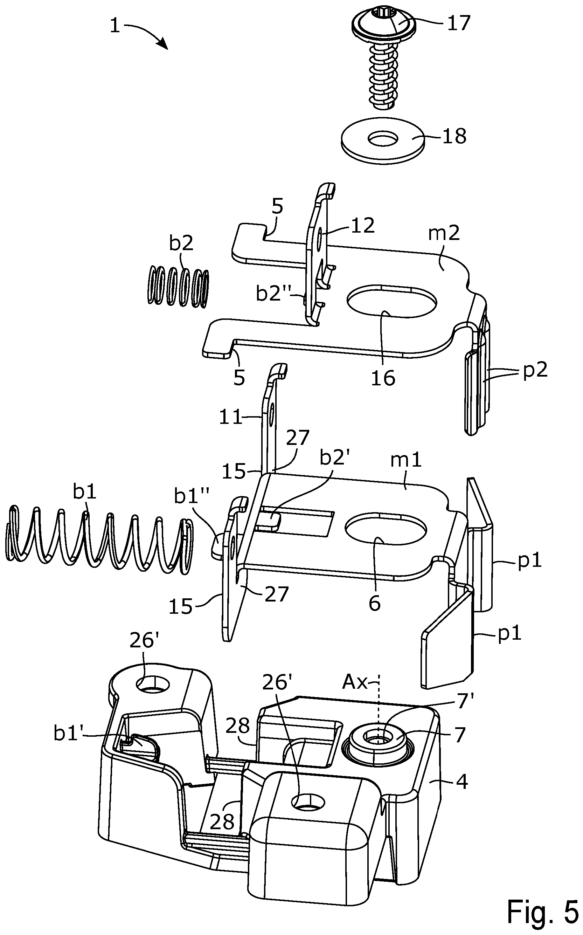

**Fig. 5** illustrates an exploded view of the contact assembly 1 illustrated in Fig. 4 and the body portion 4 of the contact assembly 1 illustrated in Fig. 1 - Fig. 3. As mentioned, the body portion 4 is configured to be attached to a body part of the charging device 10 using a number of fastening elements 26 indicated in Fig. 4. In Fig. 5, holes 26' of the body portion 4 are indicated, each being configured to receive a fastening element 26 indicated in Fig. 4.

The body portion 4 according to the illustrated embodiments is thus a separate part configured to be attached to a body part of the charging device 10. Therefore, according to some embodiments, the body portion 4, as referred to herein, may be comprised in the contact assembly 1. Moreover, the body portion 4 may also be referred to as a guide unit or a spacer for reasons further detailed below.

Since the body portion 4 is a separate part configured to be attached to a body part of the charging device 10, the contact assembly 1 can be provided as a sub-assembly which can lower production costs of charging devices. Moreover, a contact assembly 1 is provided suitable to be arranged on different types of robotic work tool charging devices without having to change the design or layout of the contact assembly 1.

The body portion 4 comprises a guide member 7 in the form of a protrusion having a circular cross section. The guide member 7 forms an axis of rotation Ax of each of the first and second contact members m1, m2 as is further explained in the following. The first contact member m1 comprises an elongate opening 6 arranged to receive the guide member 7 of the body portion 4 of the contact assembly 1 so as to allow the first contact member m1 to be pivotably and translatably connected to the body portion 4. The elongate opening 6 of the first contact member m1 may also be referred to as a mounting portion of the first contact member m1.

Likewise, the second contact member m2 comprises an elongate opening 16 arranged to receive the guide member 7 of the body portion 4 so as to allow the second contact member m2 to be pivotably and translatably connected to the body portion 4 and thereby also relative to the first contact member m1. The elongate opening 16 of the second contact member m2 may also be referred to as a mounting portion of the second contact member m2. The axis of rotation Ax of the first and second contact members m1, m2 may also be referred to as a pivot axis. As understood from the above described, the axis of rotation Ax of the first and second contact members m1, m2 is defined by the guide member 7.

According to the illustrated embodiments, the second contact member m2 is stacked on top of the first contact member m1 as seen in a direction coinciding with the axis of rotation Ax. In other words, according to the illustrated embodiments, the first contact member m1 is arranged between the body portion 4 and the second contact member m2. According to the illustrated embodiments, the first contact member m1 is in abutting contact with the body portion 4 and the second contact member m2 is in abutting contact with the first contact member m1 when the contact assembly 1 is in an assembled state as is depicted in Fig. 4.

The first and second contact members m1, m2 are configured to be attached to the body portion 4 using a fastening element 17 and a washer 18, wherein the fastening element 17 is configured to be inserted into a hole 7' of the guide member 7. The hole 7' is concentric to the axis of rotation Ax. The washer 18 is positioned between a heat of the fastening element 17 and a top surface of the guide member 7. The fastening element 17 and the washer 18 prevents detachment of the first and second contact members m1, m2 by an abutting contact between the washer 18 and a top surface of the second contact member m2. The fastening element 17 and the washer 18 are also indicated in Fig. 4.

The contact assembly 1 further comprises a first biasing member b1 interconnecting the first contact member m1 and the body portion 4 so as to bias the first contact member m1 towards the contact element 22 during the charging operation. According to the illustrated embodiments, the first biasing member b1 is a helical spring. According to further embodiments, the first biasing member b1 may be another type of biasing member, such as a leaf spring, a rubber element, or the like.

In Fig. 5, a first seat b1' for the first biasing member b1 is indicated. The first seat b1' for the first biasing member b1 is arranged on the body portion 4. Moreover, in Fig. 5, a second seat b1" for the first biasing member b1 is indicated. The second seat b1" for the first biasing member b1 is arranged on the first contact member m1. The first biasing member b1 is configured to ably a separating force between the first and second seats b1', b1" so as to bias the first contact member m1 towards the contact element 22 during the charging operation.

The contact assembly 1 further comprises a second biasing member b2. The second biasing member b2 interconnects the second contact member m2 and the first contact member m1 so as to bias the second contact member m2 towards the contact element 22 during the charging operation. According to the illustrated embodiments, the second biasing member b2 is a helical spring. However, according to further embodiments, the second biasing member b2 may be another type of biasing member, such as a leaf spring, a rubber element, or the like.

In Fig. 5, a first seat b2' for the second biasing member b2 is indicated. The first seat b2' for the second biasing member b2 is arranged on the first contact member m1. Moreover, in Fig. 5, a second seat b2" for the second biasing member b2 is indicated. The second seat b2" for the second biasing member b2 is arranged on the second contact member m2. The second biasing member b2 is configured to ably a separating force between the first and second seats b2', b2" so as to bias the second contact member m2 towards the contact element 22 during the charging operation.

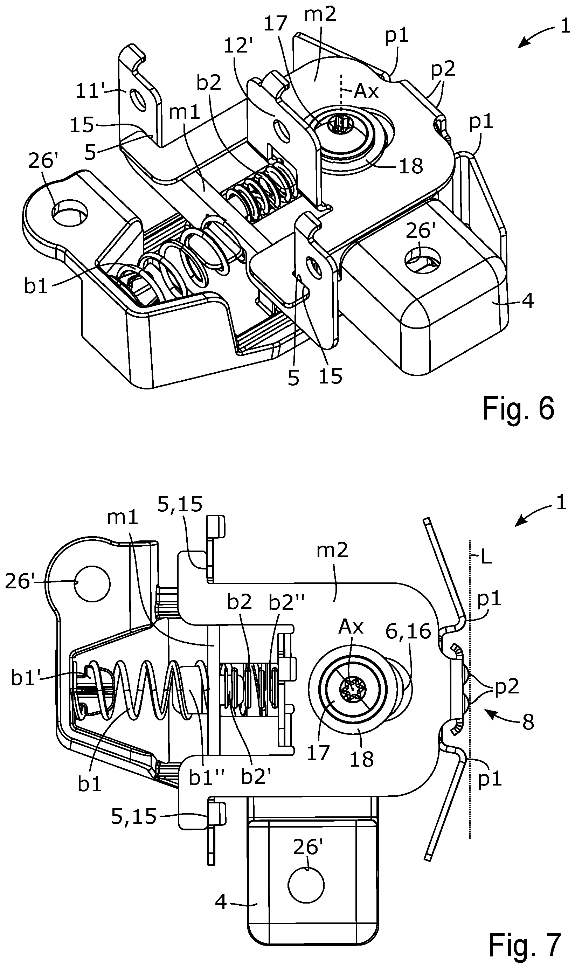

Fig. 6 illustrates a second perspective view of the contact assembly 1 and the body portion 4 of the contact assembly 1 explained with reference to Fig. 1 - Fig. 5. In Fig. 4 and Fig. 6, the contact assembly 1 is illustrated in an unbiased state. The unbiased state of the contact assembly 1, as referred to herein, means a state of the contact assembly 1 in which no external abutting force is acting on the components of the contact assembly 1.

In Fig. 5, two stop surfaces 28 of the body portion 4 and two stop surfaces 27 of the first contact member m1 are indicated. The first biasing member b1 biases the first contact member m1 to a position relative to the body portion 4 in which the stop surfaces 27 of the first contact member m1 abut against the stop surfaces 28 of the body portion 4 when the contact assembly 1 is in the unbiased state. The stop surfaces 28 of the body portion 4 and stop surfaces 27 of the first contact member m1 thus prevents further movement of the first contact member m1 when the contact assembly 1 is in the unbiased state.

Moreover, in Fig. 5 and Fig. 6, two stop surfaces 15 of the first contact member m1 and two stop surfaces 5 of the second contact member m2 are indicated. The second biasing member b2 biases the second biasing member b2 to a position relative to the first biasing member b1 in which the stop surfaces 5 of the second contact member m2 abut against the stop surfaces 15 of the first contact member m1 when the contact assembly 1 is in the unbiased state. The stop surfaces 15 of the first contact member m1 and stop surfaces 5 of the second contact member m2 thus prevents further movement of the second contact member m2 when the contact assembly 1 is in the unbiased state. Due to the stop surfaces 5, 15, 27, 28 according to the illustrated embodiments, a robust and durable contact assembly 1 is provided.

According to further embodiments, any other surfaces of the contact assembly 1 and/or the body portion 4 may be configured to act as stop surfaces configured to prevent further movement of the first and second contact members m1, m2 when the contact assembly 1 is in the unbiased state. For example, an inner surface of one or both of the elongate opening 6 of the first contact member m1 and the elongate opening 16 of the second contact member m2 may act as a stop surface, wherein the stop surface is configured to abut against an outer surface of the guide member 7 of the body portion 4 when the contact assembly 1 is in the unbiased state.

Moreover, the maxima translational movement of the first contact member m1 may be limited by the elongate opening 6 of the first contact member m1. Likewise, the maxima translational movement of the second contact member m2 may be limited by the elongate opening 16 of the second contact member m2.

**Fig. 7** illustrates the contact assembly 1 illustrated in Fig. 6 as seen in a direction coinciding with the axis of rotation Ax of the first and second contact members m1, m2. Also in Fig. 7, the contact assembly 1 is illustrated in the unbiased state.

In Fig. 7, a dotted line L has been added. The dotted line L intersects the second connection points p2 of the second contact member m2. As can be seen in Fig. 7, according to the illustrated embodiments, the second connection points p2 of the second contact member m2 forms a distal end 8 of the contact assembly 1 when the contact assembly 1 is in the unbiased state. In other words, according to the illustrated embodiments, the second connection points p2 protrudes further out from the contact assembly 1 than the first connection points p1 when the contact assembly 1 is in the unbiased state. This provides advantages which are further detailed herein.

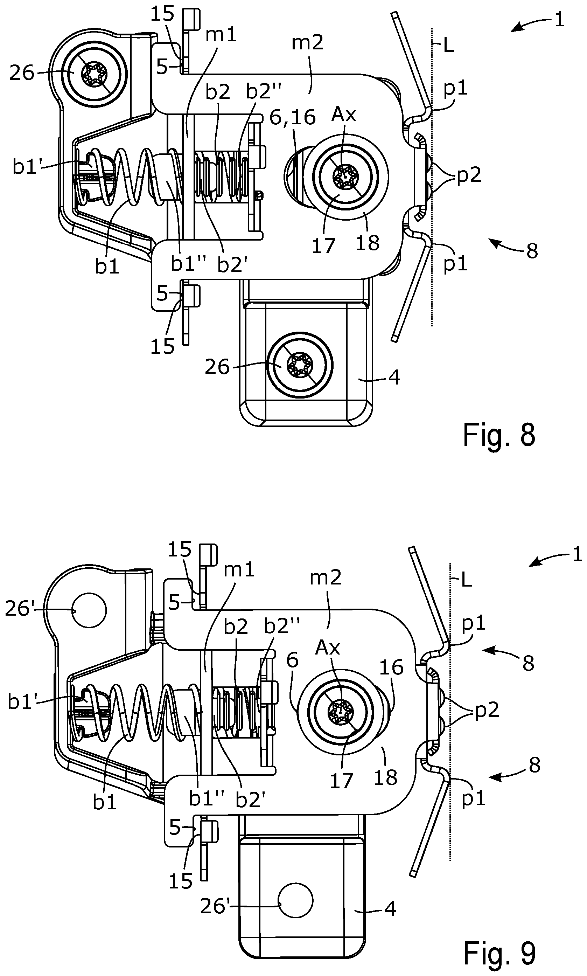

**Fig. 8** illustrates the contact assembly 1 illustrated in Fig. 7 in which the contact assembly 1 is illustrated in a first biased state. The wording biased state, as referred to herein, means a state in which an external abutting force is acting on components of the contact assembly 1.

In Fig. 8, the dotted line L intersects the second connection points p2 of the second contact member m2 as well as the first connection points p1 of the first contact member m1. In Fig. 8, the first and second contact members m1, m2 are illustrated as positioned in relative positions obtained when a planar surface is moved towards the contact assembly 1 from the right in Fig. 8 to a position in which the planar surface abuts against the second connection points p2 of the second contact member m2 as well as the first connection points p1 of the first contact member m1. Accordingly, in Fig. 8, the dotted line L can be said to represent such a planar surface.

Since the second connection points p2 protrudes further out from the contact assembly 1 than the first connection points p1 when the contact assembly 1 is in the unbiased state according to the illustrated embodiments, the second contact member m2 has moved slightly to the left in Fig. 8 as compared to in Fig. 7. Moreover, as can be seen when comparing Fig. 7 and Fig. 8, the second biasing member b2 has been compressed slightly in Fig. 8 as a result of the movement of the second contact member m2 to the left. Moreover, the stop surfaces 5 of the second contact member m2 have been released from the stop surfaces 15 of the first contact member m1 and have been moved a small distance therefrom.

**Fig. 9** illustrates the contact assembly 1 illustrated in Fig. 7 and Fig. 8 in which the contact assembly 1 is illustrated in a second biased state. Below, simultaneous reference is made to Fig. 1 - Fig. 9, if not indicated otherwise.

In Fig. 9, the dotted line L intersects the first connection points p1 of the first contact member m1 but do not intersect the second connection points p2 of the second contact member m2. Instead, the second contact member m2 has been moved further to the left as compared to in Fig. 8. As can be seen in Fig. 9, the second biasing member b2 has as a result thereof been further compressed, and the stop surfaces 5 of the second contact member m2 have been moved further from the stop surfaces 15 of the first contact member m1.

Thus, according to the illustrated embodiments, the contact assembly 1 is configured such that the first and second contact members m1, m2 are movable relative to each other such that they can be moved to relative positions in which the first connection points p1 of the first contact member m1 constitute distal ends 8 of the contact assembly 1. This can be advantageous for example when the contact assembly 1 is pressed and/or is moved against a non-flat portion of a contact element 22 of a robotic work tool 20, such as an edge of a contact element 22 of a robotic work tool 20. In other words, due to these features, an electrical contact between the first and second connection points p1, p2 of the contact assembly 1 and a contact element 22 of a robotic work tool 20 can be ensured also when the contact assembly 1 is pressed and/or is moved against a non-flat portion of a contact element 22 of a robotic work tool 20. Moreover, damage to the contact assembly 1 can be avoided, for example during docking attempts of a robotic work tool 20.

In Fig. 8 and Fig. 9, only the second contact member m2 has been subjected to a translational movement from the unbiased state of the contact assembly 1 illustrated in Fig. 7, and none of the first and second contact members m1, m2 has been subjected to any rotational movement around the axis of rotation Ax from the unbiased state of the contact assembly 1 illustrated in Fig. 7.

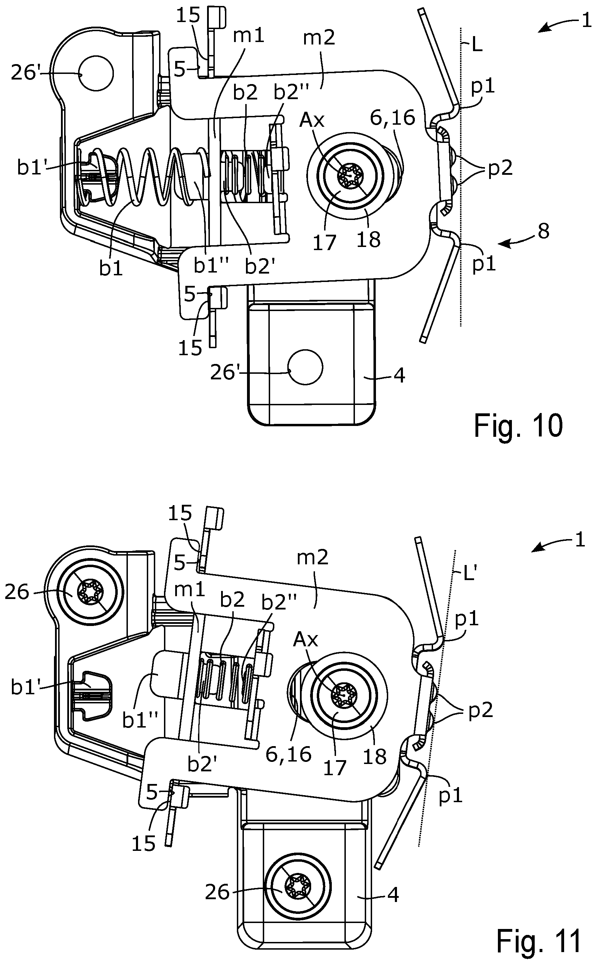

**Fig. 10** illustrates the contact assembly 1 illustrated in Fig. 7 - Fig. 9 in which the contact assembly 1 is illustrated in a third biased state. Below, simultaneous reference is made to Fig. 1 - Fig. 10, if not indicated otherwise.

In Fig. 10, the dotted line L intersects the first connection points p1 of the first contact member m1 but do not intersect the second connection points p2 of the second contact member m2. Instead, the second contact member m2 has been subjected to a translational movement and rotational movement around the axis of rotation Ax from the unbiased state of the contact assembly 1 illustrated in Fig. 7. Moreover, in Fig. 10, the first contact member m1 has not been subjected to any translational movement or rotational movement from the unbiased state of the contact assembly 1 illustrated in Fig. 7.

In other words, according to the illustrated embodiments, the first and second contact members m1, m2 are individually rotationally arranged around the axis of rotation Ax formed by the of the guide member 7 of the body portion 4. This is advantageous for example when the contact assembly 1 is pressed and/or is moved against a non-flat portion of a contact element 22 of a robotic work tool 20, such as an edge of a contact element 22 of a robotic work tool 20.

That is, since the first and second contact members m1, m2 are individually rotationally arranged around the axis of rotation Ax, an electrical contact between the first and second connection points p1, p2 of the contact assembly 1 and a contact element 22 of a robotic work tool 20 can be ensured also when the contact assembly 1 is pressed and/or is moved against a non-flat portion of a contact element 22 of a robotic work tool 20. Moreover, damage to the contact assembly 1 can be further avoided, for example during docking attempts of a robotic work tool 20.

**Fig. 11** illustrates the contact assembly 1 illustrated in Fig. 7 - Fig. 10 in which the contact assembly 1 is illustrated in a fourth biased state. Below, simultaneous reference is made to Fig. 1 - Fig. 11, if not indicated otherwise.

In Fig. 11, a dotted line L' has been added intersecting the second connection points p2 of the second contact member m2 as well as the first connection points p1 of the first contact member m1. In Fig. 11, the first and second contact members m1, m2 are illustrated as positioned in relative positions obtained when an angled flat surface is moved towards the contact assembly 1 from the right in Fig. 11 to a position in which the angled flat surface abuts against the first connection points p1 of the first contact member m1 as well as the second connection points p2 of the second contact member m2. Accordingly, in Fig. 11, the dotted line L' can be said to represent such an angled flat surface.

As seen in Fig. 11, each of the first and second contact members m1, m2 has been subjected to a translational movement and rotational movement around the axis of rotation Ax from the unbiased state of the contact assembly 1 illustrated in Fig. 7. As is evident from Fig. 11, due to the features of the contact assembly 1, an electrical contact between the first and second connection points p1, p2 of the contact assembly 1 and a contact element 22 of a robotic work tool 20 can be ensured also when the contact assembly 1 is pressed and/or is moved against an angled contact element 22 of a robotic work tool 20.

In Fig. 11, the first biasing member b1 has been omitted for reasons of brevity. However, as can be seen in Fig. 11, the first and second seats b1', b1" for the first biasing member b1 has been moved to different positions as compared to Fig. 10.

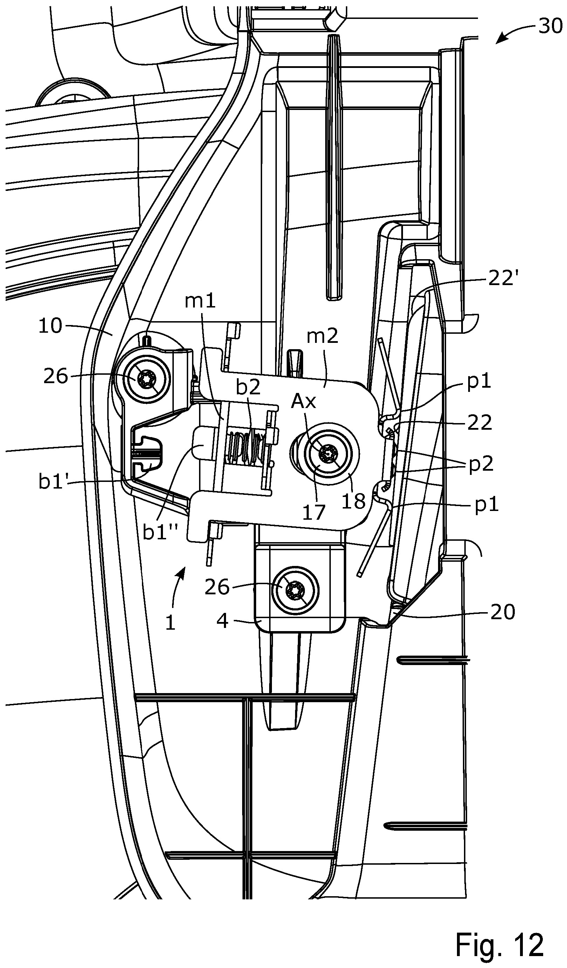

**Fig. 12** illustrates an enlarged cross section of a portion of the robotic work tool system 30 illustrated in Fig. 2. In Fig. 12, the cross section is made in a plane parallel to the charging device plate 30 illustrated in Fig. 2. Below, simultaneous reference is made to Fig. 1 - Fig. 12, if not indicated otherwise.

As can be seen in Fig. 12, the contact element 22 of the robotic work tool 20 is pressed at an angle against the contact assembly 1 of the charging device 10. The angle between the contact element 22 and the contact assembly 1 may be as a result of a non-straight docking of the robotic work tool 20 into the charging device 10. Due to these features of the contact assembly 1 of the charging device 10, an electrical contact between the first and second connection points p1, p2 of the contact assembly 1 and a contact element 22 of a robotic work tool 20 can be ensured also in such situations.

Furthermore, in Fig. 12, an edge 22' of the contact element 22 of the robotic work tool 20 is indicated. As indicated above, due to the features of the contact assembly 1 of the charging device 10, the first and second connection points p1, p2 of the contact assembly 1 can follow the contours of non-flat portions of contact elements 22 of robotic work tools 20, such as edges 22' of contact elements 22 of robotic work tools 20. Apart from the advantage of ensuring electrical contact between the contact assembly 1 and the contact element 22, this can also prevent damage to the contact assembly 1, for example during docking procedures of robotic work tools 20 into the charging device 10.

Also in Fig. 12, the first biasing member b1 has been omitted for reasons of brevity. However, as is evident from the herein described, the first biasing member b1 biases the first contact member m1 towards the contact element 22 and the second biasing member b2 biases the second contact member m2 towards the contact element 22, which further ensures a high degree of electrical contact between the first and second connection points p1, p2 of the contact assembly 1 of the charging device 10 and the contact element 22 of the robotic work tool 20.

The wording "connection point" and "point of contact" as used herein is to be interpreted in the broader sense including points of contact and connection points not being strictly geometrical points but rather corresponding to an area or field of contact. That is, as is best seen in Fig. 4 and 5, according to the illustrated embodiments, each of the first connection points p1 of the first contact member m1 and the second connection points p2 of the second contact member m2 have an elongated shape. Therefore, according to the illustrated embodiments, each of the first connection points p1 of the first contact member m1 and the second connection points p2 of the second contact member m2 forms elongated areas of contact against the contact element 22 of the robotic work tool 20 illustrated in Fig. 12. This can further ensure a high degree of electrical contact between the first and second connection points p1, p2 of the contact assembly 1 of the charging device 10 and the contact element 22 of the robotic work tool 20.

**Fig. 13** illustrates a robotic work tool system 30' according to some further embodiments. The robotic work tool system 30' according to the embodiments illustrated in Fig. 13 comprises the same features, functions, and advantages as the robotic work tool system 30 according to the embodiments explained with reference to Fig. 1 - Fig. 12, with some differences. For reasons of brevity and clarity, only the differences are explained below.

According to the embodiments illustrated in Fig. 13, the robotic work tool 20' of the robotic work tool system 30' comprises the contact assembly 1 and the robotic work tool charging device 10 comprises the contact element 22. In Fig. 13, the contact assembly 1 is schematically indicated. The contact assembly 1 of the robotic work tool 20' may be a contact assembly 1 according to the embodiments explained with reference to Fig. 3 - Fig. 12 above. Therefore, below, simultaneous reference is made to Fig. 3 - Fig. 13, if not indicated otherwise.

The body portion 4 of the contact assembly 1 may be attached to a body part 42 of the robotic work tool 20' using a number of fastening elements 26, such as screws, as is for example illustrated in Fig. 4. However, according to further embodiments, the body portion 4 of the contact assembly 1 may be attached to the body part 42 of the robotic work tool 20' in another manner, or may be an integral part of the robotic work tool 20'.

According to the embodiments illustrated in Fig. 13, the body part 42, to which the contact assembly 1 is attached, is a front part of the robotic work tool 20' as seen relative to a forward moving direction of the robotic work tool 20'. However, according to further embodiments, the contact assembly 1 may be attached to another portion of the robotic work tool 20'.

Moreover, as can be seen in Fig. 13, according to these embodiments, the contact element 22 is attached to a body part 49 of the charging device 10'. The contact element 22 is electrically connected to a charging unit of the charging device 10', such as a charging unit 13 explained with reference to Fig. 3 above.

Moreover, as is understood from the above, according to the embodiments illustrated in Fig. 13, the contact assembly 1 is configured to engage with the contact element 22 of the charging device 10' for receiving electric current from the charging device 10' in the charging operation of the robotic work tool 20'. In Fig. 1, the contact assembly 1 of the robotic work tool 20 does not engage with the contact element 22 of the charging device 10' because the robotic work tool 20' is not in the docked position relative to the charging device 10'.

The robotic work tool 20' may assume the docked position relative to the charging device 10' by moving in a forward moving direction from the position illustrated in Fig. 13. The robotic work tool 20' will then assume a position as is illustrated in Fig. 2. In the docked position, the contact assembly 1 of the robotic work tool 20' engage with the contact element 22 of the charging device 10'.

The robotic work tool 20' may comprise at least one second contact assembly having an identical but mirrored design as the contact assembly 1 explained herein. As explained with reference to Fig. 3 above, such at least one second contact assembly may comprise the same features, functions, and advantages as the contact assembly 1 explained herein. These features, functions, and advantages will not be repeated for reasons of brevity and clarity.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A contact assembly (1) for a robotic work tool system (30, 30'), wherein the contact assembly (1) is configured to engage a contact element (22) of the robotic work tool system (30, 30') to transfer electric current between a robotic work tool charging device (10, 10') and a robotic work tool (20, 20') of the robotic work tool system (30, 30') in a charging operation, and wherein the contact assembly (1) comprises:
- a body portion (4) configured to be attached to one of the charging device (10, 10') and the robotic work tool (20, 20'), wherein the other of the charging device (10, 10') and the robotic work tool (20, 20') comprises the contact element (22),
- a first contact member (m1) comprising one or more first connection points (p1) each arranged to provide a point of contact between the first contact member (m1) and the contact element (22), wherein the first contact member (m1) is pivotably and translatably connected to the body portion (4),
- a first biasing member (b1) interconnecting the first contact member (m1) and the body portion (4) so as to bias the first contact member (m1) towards the contact element (22) during the charging operation, and
- a second contact member (m2) translatably connected relative to the first contact member (m1),
wherein the second contact member (m2) comprises one or more second connection points (p2) each arranged to provide a point of contact between the second contact member (m2) and the contact element (22), and
wherein the contact assembly (1) comprises a second biasing member (b2) interconnecting the second contact member (m2) and the first contact member (m1) so as to bias the second contact member (m2) towards the contact element (22) during the charging operation.

2. The contact assembly (1) according to claim 1, wherein the second contact member (m2) is in abutting contact with the first contact member (m1).

3. The contact assembly (1) according to claim 1 or 2, wherein the second contact member (m2) comprises a stop surface (5) configured to abut against a surface (15) of the first contact member (m1) in an unbiased state of the contact assembly (1).

4. The contact assembly (1) according to any one of the preceding claims, wherein the one or more second connection points (p2) of the second contact member (m2) forms a distal end (8) of the contact assembly (1) in an unbiased state of the contact assembly (1).

5. The contact assembly (1) according to any one of the preceding claims, wherein the first contact member (m1) comprises an elongate opening (6) arranged to receive a guide member (7) of the body portion (4) so as to allow the first contact member (m1) to be pivotably and translatably connected to the body portion (4).

6. The contact assembly (1) according to any one of the claims 5, wherein the maxima translational movement of the first contact member (m1) is limited by the elongate opening (6) of the first contact member (m1), and wherein an axis of rotation (Ax) of the first contact member (m1) is defined by the guide member (7).

7. The contact assembly (1) according to any one of the preceding claims, wherein the second contact member (m2) is pivotably connected relative to the first contact member (m1).

8. The contact assembly (1) according to any one of the claims 7, wherein the second contact member (m2) comprises an elongate opening (16) arranged to receive a guide member (7) of the body portion (4) so as to allow the second contact member (m2) to be pivotably and translatably connected relative to the first contact member (m1).

9. The contact assembly (1) according to any one of the claims 8, wherein the maxima translational movement of the second contact member (m2) is limited by the elongate opening (16) of the second contact member (m2), and wherein an axis of rotation (Ax) of the second contact member (m2) is defined by the guide member (7).

10. The contact assembly (1) according to any one of the preceding claims, wherein the first contact member (m1) comprises two first connection points (p1), and wherein the one or more second connection points (p2) of the second contact member (m2) is/are located at least substantially between the two first connection points (p1).

11. The contact assembly (1) according to any one of the preceding claims, wherein the second contact member (m2) comprises two second connection points (p2).

12. The contact assembly (1) according to any one of the preceding claims, wherein the first biasing member (b1) is a helical spring.

13. The contact assembly (1) according to any one of the preceding claims, wherein the second biasing member (b2) is a helical spring.

14. The contact assembly (1) according to any one of the preceding claims, wherein the first contact member (m1) is made from a sheet of metal.

15. The contact assembly (1) according to any one of the preceding claims, wherein the second contact member (m2) is made from a sheet of metal.

16. A robotic work tool charging device (10) comprising a contact assembly (1) according to any one of the preceding claims, wherein the body portion (4) of the contact assembly (1) is attached to a body part (49) of the charging device (10).

17. A robotic work tool (20') comprising a contact assembly (1) according to any one of the preceding claims, wherein the body portion (4) of the contact assembly (1) is attached to a body part (42) of the robotic work tool (20').

18. A robotic work tool system (30, 30') comprising a robotic work tool charging device (10) according to claim 16, or a robotic work tool (20') according to claim 17.

19. The robotic work tool system (30, 30') according to claim 18, wherein the robotic work tool (20, 20') is an autonomous robotic lawnmower.
